# EUROPÄISCHE PATENTANMELDUNG

(11) **EP 1 313 317 A2**
(43) Veröffentlichungstag der Anmeldung: **21.05.2003**
(21) Anmeldenummer: 02024224.4
(22) Anmeldetag: 31.10.2002
(51) Int. Cl.: H04N 7/10, H04N 7/16

(54) **Fernsehübertragungssystem**

(30) Priorität: 08.11.2001 DE 10154933
(71) Anmelder: GRUNDIG Aktiengesellschaft, 90471 Nürnberg (DE)
(72) Erfinder: Böckmann, Norbert, 50579 Langenzenn (DE)

(57) **Zusammenfassung**

Die Erfindung betrifft ein Fernsehübertragungssystem, welches mehrere Bildsignalquellen, mehrere Bildsignalwiedergabegeräte und eine Zentraleinheit aufweist. Die Zentraleinheit ist zum Empfang der von den Bildsignalquellen gelieferten Bildsignale und zur Verteilung dieser Bildsignale an die Bildsignalwiedergabegeräte vorgesehen. Eine der Quellen liefert fernsehrundfunkunabhängige Livesignale. Diese werden zusammen mit den weiteren Bildsignalen den einzelnen Bildwiedergabegeräten zur Verfügung gestellt, und - wenn dies der Benutzer mittels der Bedieneinheit anfordert - auf dem Display des jeweiligen Bildsignalwiedergabegerätes angezeigt.

## Beschreibung

Die Erfindung betrifft ein Fernsehübertragungssystem, welches mehrere Bildsignalquellen, mehrere Bildsignalwiedergabegeräte und eine Zentraleinheit aufweist, welche zum Empfang von den Bildsignalquellen gelieferten Bildsignalen und zur Verteilung dieser Bildsignale an die Bildsignalwiedergabegeräte vorgesehen ist.

Ein derartiges Fernsehübertragungssystem ist aus der
EP 0 470 124 B1 bekannt. Bei dem dort beschriebenen System, welches insbesondere als Hotelfernsehsystem verwendet werden kann, sind als Bildsignalquellen eine Satellitenantenne, eine terrestrische Empfangsantenne und Videokonserven in Form von Videoabspielgeräten vorgesehen. Die von diesen Bildsignalquellen abgeleiteten Signale werden in der Zentraleinheit zusammengestellt, um von dort aus zusammen mit Steuersignalen über ein Verteilnetz an Bildsignalwiedergabegeräte, die in den Hotelzimmern aufgestellt sind, verteilt zu werden. Jedes Bildsignalwiedergabegerät weist eine Modulvorrichtung auf, über welche der Datenverkehr mit der Zentraleinheit erfolgt.

Der Erfindung liegt die Aufgabe zugrunde, die Nutzungsmöglichkeiten eines Fernsehübertragungssystems mit den im Oberbegriff des Anspruchs 1 angegebenen Merkmale zu erweitern.

Diese Aufgabe wird durch ein Fernsehübertragungssystem mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen darin, dass auch Bildmaterial von momentan stattfindenden Ereignissen, bezüglich derer keine Fernsehrundfunkübertragung erfolgt, live in die Hotelzimmer eines Hotels übertragen werden kann und dort dem Hotelgast auf Wunsch zur Verfügung steht. Bei diesen Ereignissen kann es sich beispielsweise um Sportveranstaltungen, kulturelle Veranstaltungen, Popkonzerte, Veranstaltungen mit politischem Hintergrund, Modevorführungen, Varietéshows, Auftritte von Künstlern, Stripshows, Zirkusveranstaltungen oder Volksfeste handeln. Dies bedeutet für den Betreiber des Hotels die vorteilhafte Möglichkeit, die bei Hotelfernsehanlagen bisher üblichen Angebote, entweder Fernsehrundfunksignale oder von Konserven abgeleitete Signale wiederzugeben, zu erweitern. Aufgrund der Aktualität der zusätzlich zur Verfügung gestellten Livesignale kann davon ausgegangen werden, dass dieser angebotene Zusatzdienst zumindest in großen Hotels auch viel genutzt wird.

Das Livematerial kann von Ereignissen stammen, die im Hotel oder dessen Nähe gefilmt werden, beispielsweise von einer im Hotel stattfindenden Show. Durch diese Übertragung von im Hotel oder dessen Nähe stattfindenden Ereignissen werden Hotelgäste auf die genannten Ereignisse aufmerksam und werden gegebenenfalls dazu motiviert, die genannten Ereignisse direkt zu besuchen.

Das Livematerial kann aber auch von einem weit entfernten Ort stammen und über eine Satellitenübertragungsstrecke zur Zentraleinheit übertragen werden. Gehört das Hotel beispielsweise einer Hotelkette an, der auch Hotels in Feriengebieten angehören, dann können Livebilder aus anderen Hotels bzw. dem jeweils zugehörigen Feriengebiet übertragen werden, um Werbung für die Hotelkette zu betreiben.

Bei den übertragenen Livesignalen kann es sich auch um einen gebührenpflichtigen Service handeln, für den der Hotelgast, der ihn benutzen möchte, in Abhängigkeit von der Benutzungszeit bezahlen muss. Dies kann insbesondere bei einer Übertragung von Popkonzerten, Varietéshows, Stripshows und Zirkusveranstaltungen der Fall sein.

Gemäß einer vorteilhaften Weiterbildung der Erfindung stehen die Bildwiedergabegeräte in bidirektionaler Verbindung mit der Kamera, die das jeweilige Ereignis filmt. Dadurch wird es beispielsweise möglich, die Kameraführung oder ein Zoomen zu beeinflussen, um gewünschte Details des Liveereignisses besser erkennen zu können.

Vorzugsweise werden die in diesem Zusammenhang eingegebenen Steuerbefehle über ein in der Zentraleinheit befindliches Steuerbefehlsfilter geführt. Dadurch kann sichergestellt werden, dass keine sich widersprechenden oder unsinnigen Steuerbefehle an die Kamera übertragen werden.

Werden in der Zentraleinheit die Livesignale in einem Zwischenspeicher gespeichert, dann können sie von dort aus auf Wunsch eines Hotelgastes auch zeitversetzt ausgelesen werden.

Gemäß einer Ausgestaltung der Erfindung weist die Zentraleinheit einen programmierbaren Speicher auf, der mit einer Vielzahl von Speicherbereichen versehen ist. Jeder dieser Speicherbereiche kann von einem Bildwiedergabegerät aus reserviert und programmiert werden, so dass vom jeweiligen. Hotelgast gewünschte Bildbeiträge automatisch in einem Speicher der Zentraleinheit aufgezeichnet werden und von dort aus zu einem späteren Zeitpunkt vom jeweiligen Hotelgast abgerufen werden können.

Alternativ dazu kann der programmierbare Speicher und der Speicher, auf welchem der gewünschte Beitrag aufgezeichnet wird, auch Bestandteil des jeweiligen Bildwiedergabegerätes auf dem Hotelzimmer sein.

Gemäß einer vorteilhaften Weiterbildung der Erfindung weist die Zentraleinheit Steuermittel auf, die eine Weiterleitung der von der Kamera gelieferten fernsehrundfunkunabhängigen Livesignale an einzelne Bildwiedergabegeräte oder an definierte Gruppen von Bildsignalwiedergabegeräten bedarfsweise verhindert. Beispielsweise kann ein Hotel unterschiedliche Zimmerpreisgruppen definieren. Entscheidet sich ein Hotelgast dafür, ein Zimmer der niedrigsten Preisgruppe zu bestellen, dann wird eine Weiterleitung der Livesignale an dieses Zimmer für die Dauer des jeweiligen Buchungszeitraums gänzlich verhindert. Entscheidet sich ein Hotelgast hingegen dafür, ein Zimmer der höchsten Preisgruppe zu bestellen, dann werden dem reservierten Zimmer für die Dauer des Buchungszeitraums auch die Livesignale zur Verfügung gestellt.

Weitere vorteilhafte Eigenschaften der Erfindung ergeben sich aus der nachfolgenden Erläuterung von Ausführungsbeispielen anhand der Figuren. Es zeigt:
- Figur 1: ein Blockschaltbild eines ersten Ausführungsbeispiels für ein Fernsehübertragungssystem gemäß der Erfindung und
- Figur 2: ein Blockschaltbild eines zweiten Ausführungsbeispiels für ein Fernsehübertragungssystem gemäß der Erfindung.

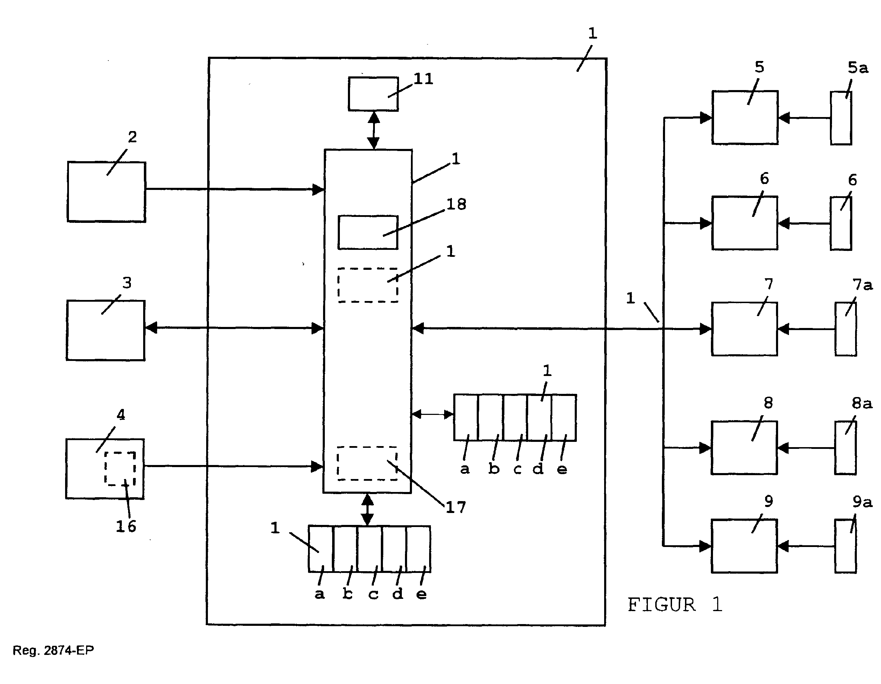

Die Figur 1 zeigt ein Blockschaltbild eines ersten Ausführungsbeispiels für ein Fernsehübertragungssystem gemäß der Erfindung. Bei dem dargestellten System handelt es sich um eine Hotelfernsehanlage.

Diese weist als Bildsignalquellen eine oder mehrere Fernsehrundfunksignal-Empfangsantennen auf, beispielsweise eine Satellitenantennenanlage 2, eine Videokonserve, beispielsweise in Form mehrerer Videodisk-Abspielgeräte 3, und eine Kamera 4.

Die Kamera 4 ist zur Lieferung von fernsehrundfunkunabhängigen Livesignalen vorgesehen. Mittels dieser Kamera können Live-Ereignisse gefilmt werden, die innerhalb des Hotels, in der Nähe des Hotels, in derselben Stadt wie das Hotel oder auch an einem beliebigen anderen Ort stattfinden. Die von der Kamera abgeleiteten Livesignale werden einer im Hotel angeordneten Zentraleinheit 1 zugeführt. Diese Zuführung kann über eine Kabelverbindung und bei Bedarf unter Verwendung einer Satellitenübertragungsstrecke erfolgen.

Live-Ereignisse, die mittels der Kamera gefilmt werden, sind beispielsweise Sportereignisse, Theaterstücke, Modeshows, Varietéshows, Stripshows, kulturelle Veranstaltungen, Popkonzerte oder Auftritte von Künstlern. Die Auswahl der jeweils übertragenen Live-Ereignisse trifft die Hotelleitung, bzw. die Betreiber der Anlage, die ihren Gästen etwas Besonderes bieten möchte.

Die von der Kamera 4 gelieferten Livesignale, die von der Videokonserve 3 abgeleiteten Signale und die über die Satellitenantennenanlage 2 empfangenen Videosignale werden in der Zentraleinheit 1 des Hotels einer Signalsammel und -verteilerstelle 10 zugeführt, die die angelieferten Signale zu einer Verteilung über das Verteilnetz 15 des Hotels zusammenstellt bzw. in eine zur Verteilung geeignete Multiplexform bringt.

Das Verteilnetz 15 ist in die einzelnen Hotelzimmer geführt, in denen sich Fernsehgeräte 5, 6, 7, 8, 9 befinden, denen jeweils eine Fernbedienung 5a, 6a, 7a, 8a, 9a als Bedieneinheit zugeordnet ist. Mittels dieser Bedieneinheit kann ein Hotelgast eines der über das Verteilnetz übertragenen Signale, insbesondere auch das von der Kamera 4 abgeleitete Livesignal, auswählen, so dass es auf dem Bildschirm des zugehörigen Fernsehgerätes dargestellt wird.

Findet beispielsweise in einem Saal des Hotels eine Varietéshow statt, so hat die Hotelleitung die Möglichkeit, Bilder von dieser Show mittels der Kamera 4 aufzunehmen und in die einzelnen Hotelzimmer zu übertragen. Auf diese Weise können auch Hotelgästen, die entweder keine Karten mehr für die genannte Show bekommen haben oder die aus zeitlichen Gründen nur einen Teil der Show verfolgen möchten, Livebilder von der Show zur Verfügung gestellt werden. Ein weiterer Vorteil einer derartigen Übertragung von Livebildern einer im Hotel stattfindenden Show besteht darin, dass ein Teil der Gäste möglicherweise erst aufgrund dieser Liveübertragung auf die laufende Show aufmerksam wird und/oder Gefallen an ihr findet, so dass er die Show noch persönlich besucht.

Die von der Show abgeleiteten Bilder können in vorteilhafter Weise auch anderen Hotels derselben Hotelkette zugeführt werden, so dass auch deren Gäste in den Genuss einer Liveshow kommen können.

Eine Ausgestaltung der Erfindung besteht darin, den Hotelgästen die von der Kamera 4 abgeleiteten Livesignale gegen eine Gebühr zur Verfügung zu stellen. Zu diesem Zweck ist in der Zentraleinheit 1 ein Gebührenzähler 13 vorgesehen, der die Benutzungszeit des genannten Live-Services für jedes Hotelzimmer erfasst, so dass diese Benutzungszeit dem jeweiligen Hotelgast bei seiner Abreise in Rechnung gestellt werden kann.

Eine vorteilhafte Weiterbildung der Erfindung besteht darin, die Fernsehgeräte in den Hotelzimmern über die Zentraleinheit 1 mit der Kamera 4 bidirektional zu verbinden. Auf diese Weise können mittels der Bedieneinheit eines Fernsehgerätes auch Steuersignale für die Kamera eingegeben werden, beispielsweise zu einem Verdrehen der Kamera, zu einem Zoomen oder auch zu einer Umschaltung zwischen verschiedenen Kameras, die am Ort des gefilmten Ereignisses installiert sind.

Um zu vermeiden, dass der Kamera 4 unsinnige oder sich widersprechende Steuerbefehle zugeführt werden, werden die eingegebenen Steuerbefehle in der Zentraleinheit 1 über ein Steuerbefehlsfilter 14 geleitet, welches die eingegebenen Bedienbefehle auf Plausibilität prüft und unsinnige und sich widersprechende Steuerbefehle ausfiltert.

Vorzugsweise enthält die Zentraleinheit 1 einen Speicher 11, der zu einer Zwischenspeicherung der von der Kamera 4 erzeugten Livesignale vorgesehen ist. Der Vorteil einer derartigen Zwischenspeicherung von Livesignalen besteht darin, dass im Fall einer ungewollten Unterbrechnung der Liveübertragung zeitlich vorher übertragenes Bildmaterial als Lückenfüller genutzt werden kann. Weiterhin kann aufgrund dieser Zwischenspeicherung ein Hotelgast die im Speicher 11 zwischengespeicherten Signale auch zeitversetzt betrachten oder einzelne besonders interessante Passagen des Bildmaterials zu einem späteren Zeitpunkt wiederholt betrachten. Zu diesem Zweck kann das übertragene Bildmaterial im Speicher 11 auch mehrfach abgelegt sein.

Gemäß einer vorteilhaften Weiterbildung der Erfindung weist die Zentraleinheit 1 einen Speicher 12 auf, welcher eine Vielzahl von Speicherbereichen bzw. Speicherblöcken a - e enthält. Jeder dieser Speicherblöcke enthält einen ersten Speicherteil, welcher programmierbar ist, und einen zweiten Speicherteil, in welchem übertragenes Bildmaterial abgespeichert werden kann.

Ein Hotelgast hat die Möglichkeit, mittels der Bedieneinheit des in seinem Hotelzimmer befindlichen Fernsehgerätes einen der Speicherblöcke zu reservieren. Nach dieser Reservierung kann er mittels seiner Bedieneinheit den ersten Speicherteil des reservierten Speicherblockes mit Aufzeichnungswunschdaten programmieren. Beispielsweise besteht der Aufzeichnungswunsch darin, noch am selben Tag zwischen 20 Uhr und 21 Uhr mittels der Kamera 4 aufgenommene Bilder von einer im Hotel stattfindenden Varietéshow im zweiten Speicherteil des reservierten Speicherblockes aufzuzeichnen bzw. abzuspeichern.

Nach erfolgter Abspeicherung kann der Hotelgast zu einem späteren Zeitpunkt das aufgezeichnete Bildmaterial aus dem Speicher 12 abrufen und auf dem Bildschirm des in seinem Hotelzimmer angeordneten Fernsehgerätes betrachten, gegebenenfalls auch mehrmals.

Gemäß einer Ausgestaltung der Erfindung werden die von der Kamera 4 aufgenommenen Livesignale in der Kamera 4 einem Verschlüssler 16 zugeführt und dort verschlüsselt. Die Übertragung des Live-Bildmaterials auf der Übertragungsstrecke zwischen der Kamera 4 und der Zentraleinheit 1 erfolgt verschlüsselt. In der Zentraleinheit 1 ist ein Entschlüssler 17 vorgesehen, der zur Entschlüsselung der von der Kamera 4 gelieferten Signale vorgesehen ist. Die über das Verteilnetz 15 an die einzelnen Hotelzimmer übertragenen Signale sind unverschlüsselt.

Eine mögliche Ausführungsform der Erfindung besteht darin, die Zentraleinheit 1 mit einer Steuereinheit 18 auszustatten, die eine Weiterleitung der von der Kamera 4 gelieferten fernsehrundfunkunabhängigen Livesignale an einzelne Hotelzimmer bzw. an definierte Gruppen von Hotelzimmern verhindert. So hat die Hotelleitung die Möglichkeit, verschiedene Hotelzimmer-Preisgruppen zu definieren. Gästen, die bereit sind, mehr Geld für Service-Leistungen auszugeben und ein Hotelzimmer einer höheren Preisgruppe reserviert haben, wird eine Wiedergabe des Live-Bildmaterials ermöglicht. Gästen, die nicht bereit sind, mehr Geld für Service-Leistungen auszugeben, werden von einer Wiedergabe des Live-Bildmaterials ausgeschlossen.

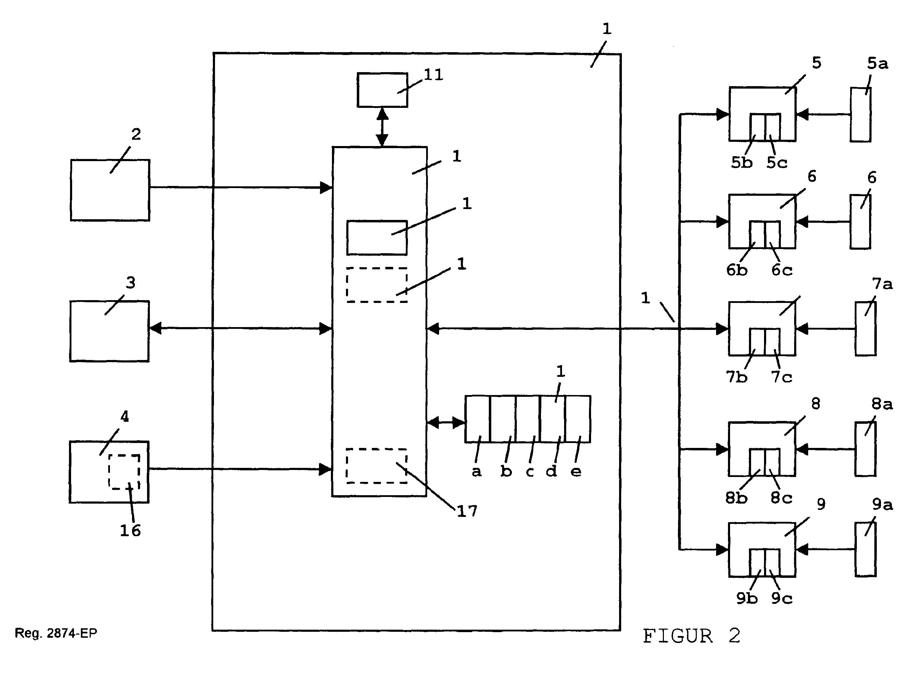

Die Figur 2 zeigt ein Blockschaltbild eines zweiten Ausführungsbeispiels für ein Fernsehübertagungssystem gemäß der Erfindung. Dieses unterscheidet sich vom ersten Ausführungsbeispiel lediglich dadurch, dass der Speicher 12 in der Zentraleinheit 1 entfällt und stattdessen jedem der Fernsehgeräte in den Hotelzimmern ein eigener programmierbarer Speicher 5b - 9b zugeordnet ist. Dieser ist mittels der Bedieneinheit 5a - 9a des jeweiligen Fernsehgerätes mit Aufzeichnungswunschdaten programmierbar. Unter Auswertung der Aufzeichnungswunschdaten erfolgt eine Aufzeichnung der übertragenen Signale in einem Speicher 5c - 9c des jeweiligen Fernsehgerätes. Bei diesem Speicher kann es sich beispielsweise um eine Festplatte handeln.

### Bezugszeichenliste:

- 1: Zentraleinheit
- 2: Satellitenantenne
- 3: Videokonserve
- 4: Kamera
- 5 - 9: Fernsehgeräte
- 5a - 9a: Fernbedienungen
- 5b - 9b: programmierbare Speicher
- 5c - 9c: Speichereinheiten
- 10: Signalsammler und -verteile
- 11: Zwischenspeicher
- 12: programmierbarer Speicher
- 13: Gebührenzähler
- 14: Steuerbefehlsfilter
- 15: Verteilnetz
- 16: Verschlüssler
- 17: Entschlüssler
- 18: Steuermittel

## Patentansprüche

1. Femsehübertragungssystem, welches aufweist:
- mehrere Bildsignalquellen,
- mehrere Bildsignalwiedergabegeräte und
- eine Zentraleinheit, welche zum Empfang von von den Bildsignalquellen gelieferten Bildsignalen und zur Verteilung dieser Bildsignale an die Bildsignalwiedergabegeräte vorgesehen ist,
**dadurch gekennzeichnet, dass**
- eine der Bildsignalquellen eine zur Lieferung von femsehrundfunkunabhängigen Livesignalen vorgesehene Kamera (4) ist,
- die Zentraleinheit (1) die von der Kamera (4) gelieferten fernsehrundfunkunabhängigen Livesignale und die von den anderen Bildsignalquellen (2, 3) gelieferten Bildsignale den Bildsignalwiedergabegeräten (5 - 9) über ein Verteilnetz (15) zur Verfügung stellt und
- jedes der Bildsignalwiedergabegeräte eine Bedieneinheit (5a - 9a) aufweist, mittels derer die von der Kamera (4) gelieferten femsehrundfunkunabhängigen Livesignale zu einer Darstellung auf dem Display des jeweiligen Bildsignalwiedergabegerätes auswählbar sind.

2. Femsehübertragungssystem nach Anspruch 1,
**dadurch gekennzeichnet, dass**
die von der Kamera (4) gelieferten fernsehrundfunkunabhängigen Livesignale der Zentraleinheit (1) über eine Satellitenübertragungsstrecke zugeführt werden.

3. Femsehübertragungssystem nach Anspruch 1 oder 2,
**dadurch gekennzeichnet, dass**
die Zentraleinheit (1) einen Gebührenzähler (13) aufweist, mittels welchem für jedes der Bildsignalwiedergabegeräte die Betrachtungszeit der fernsehrundfunkunabhängigen Livesignale erfasst wird.

4. Femsehübertragungssystem nach einem der vorhergehenden Ansprüche,
**dadurch gekennzeichnet, dass**
die Bildsignalwiedergabegeräte (5 - 9) über die Zentraleinheit (1) mit der Kamera (4) in bidirektionaler Verbindung stehen.

5. Fernsehübertragungssystem nach Anspruch 4,
**dadurch gekennzeichnet, dass**
mittels der Bedieneinheiten (5a - 9a) der Bildwiedergabegeräte (5 - 9) Steuerbefehle für die Kamera (4) eingebbar sind und/oder die mittels der Bedieneinheit eingegebenen Steuerbefehle in der Zentraleinheit (1) über ein Steuerbefehlsfilter (14) geführt werden.

6. Femsehübertragungssystem nach einem der vorhergehenden Ansprüche,
**dadurch gekennzeichnet, dass**
die Zentraleinheit (1) einen Speicher (11) aufweist, der zur Zwischenspeicherung der von der Kamera gelieferten fernsehrundfunkunabhängigen Livesignale vorgesehen ist und/oder
die im Speicher (11) abgespeicherten Livesignale mittels der Bedieneinheit eines Bildwiedergabegerätes zeitverzögert aus dem Speicher abrufbar sind.

7. Fernsehübertragungssystem nach einem der vorhergehenden Ansprüche,
**dadurch gekennzeichnet, dass**
die Zentraleinheit einen programmierbaren Speicher (12) mit einer Vielzahl von Speicherbereichen (a - e) aufweist, dass mittels der Bedieneinheit der Bildwiedergabegeräte einer der Speicherbereiche für das jeweilige Bildwiedergabegeräte reservierbar und mit Aufzeichnungswunschdaten programmierbar ist, und dass die Zentraleinheit unter Auswertung der Aufzeichnungswunschdaten eine Aufzeichnung der von einer gewünschten Bildsignalquelle in einem gewünschten Aufzeichnungszeitintervall übertragenen Signale in einem dem jeweiligen Bildwiedergabegerät zugeordneten Speicherbereich des Speichers (12) steuert.

8. Femsehübertragungssystem nach einem der vorhergehenden Ansprüche,
**dadurch gekennzeichnet, dass**
die Bildsignalwiedergabegeräte (5 - 9) jeweils einen programmierbaren Speicher (5b - 9b) aufweisen, dass dieser Speicher mittels der Bedieneinheit (5a - 9a) des jeweiligen Bildsignalwiedergabegerätes mit Aufzeichnungswunschdaten programmierbar ist und dass unter Auswertung der Aufzeichnungswunschdaten eine Aufzeichnung der von einer gewünschten Bildsignalquelle in einem gewünschten Aufzeichnungsintervall übertragenen Signale in einem Speicher (5c - 9c) des Bildsignalwiedergabegerätes erfolgt.

9. Fernsehübertragungssystem nach einem der vorhergehenden Ansprüche,
**dadurch gekennzeichnet, dass**
die Kamera einen Verschlüssler (16) zur Verschlüsselung der fernsehrundfunkunabhängigen Livesignale aufweist und die Zentraleinheit (1) mit einem Entschlüssler (17) zur Entschlüsselung der von der Kamera gelieferten, verschlüsselten Livesignale versehen ist.

10. Fernsehübertragungssystem nach einem der vorhergehenden Ansprüche,
**dadurch gekennzeichnet, dass**
die Zentraleinheit (1) Steuermittel (18) aufweist, die eine Weiterleitung der von der Kamera (4) gelieferten fernsehrundfunkunabhängigen Livesignale an einzelne Bildsignalwiedergabegeräte oder an definierte Gruppen von Bildsignalwiedergabegeräten bedarfsweise verhindert.
